# FASCICULE DE BREVET EUROPEEN

(11) **EP 1 122 442 B1**
(45) Date de publication et mention de la délivrance du brevet: **08.10.2008**
(21) Numéro de dépôt: 01420023.2
(22) Date de dépôt: 29.01.2001
(51) Int. Cl.: F04D 29/04, F04D 19/04, F16C 27/06

(54) **Système amortisseur et centreur de roulement pour pompe à vide sur palier magnétique**
Lagerzentrier-und Dämpfungssystem für eine Vakuumpumpe mit Magnetlagern
Bearing damping and centering system for a vacuum pump with magnetic bearings

(30) Priorité: 31.01.2000 FR 0001173
(43) Date de publication de la demande: 08.08.2001
(73) Titulaire: Alcatel Lucent, 75008 Paris (FR)
(72) Inventeur: Bouille, André, 74000 Annecy (FR); Chollet, Jean-Emile, 74160 Archamps (FR)
(74) Mandataire: Korakis-Ménager, Sophie

(56) Documents cités:
- EP-A- 0 220 581
- EP-A- 0 768 467
- DE-A- 3 834 271
- DE-U- 8 910 040
- FR-A- 2 614 375
- GB-A- 1 243 234

## Description

La présente invention concerne la suspension des rotors des pompes à vide comme définit dans le préambule de la revendication 1. Une telle pompe est connue du document FR-A- 2 614 375.

Dans les pompes à vide, un rotor mobile en rotation dans un stator est tenu par des paliers magnétiques qui, en fonctionnement normal, maintiennent en position radiale centrée le rotor dans le stator selon une précision de maintien normal centré, sans contact mécanique entre le rotor et le stator. Les paliers magnétiques comportent des électroaimants alimentés en énergie électrique par des circuits appropriés assurant un asservissement de position radiale du rotor dans le stator.

L'efficacité du maintien radial du rotor dans le stator est déterminée par la force des électroaimants, et le maintien nécessite l'alimentation suffisante des électroaimants en énergie électrique.

Il peut se produire parfois un défaut ou une insuffisance de fonctionnement normal des paliers magnétiques. Le défaut se produit par exemple lors d'une interruption de l'alimentation électrique des électroaimants. Dans ce cas, les paliers magnétiques n'assurent plus la fonction de centrage du rotor, et il se produit une étape "d'atterrissage" dans laquelle le rotor passe d'un état de maintien sans contact mécanique à un état de maintien par contact mécanique. Au cours de cet atterrissage, le rotor tend à venir en contact du stator. Par suite de la rotation très rapide du rotor, par exemple de l'ordre de 30 000 tours par minute, un tel contact peut provoquer la destruction de la pompe à vide.

Le défaut peut également se produire lors d'une contrainte subite et importante sur le rotor. La contrainte subite peut provoquer un décentrage du rotor dans le stator, avec contact et rebonds. Il peut en résulter une perte du contrôle de position du rotor par les capteurs et aimants des paliers magnétiques, et le système de sécurité donne alors un ordre d'arrêt qui produit l'arrêt intempestif de la pompe.

Pour résoudre le problème du maintien mécanique du rotor pendant une étape d'atterrissage, on a déjà prévu d'équiper les pompes à vide avec des paliers mécaniques secondaires d'atterrissage à roulement qui, à défaut de fonctionnement normal des paliers magnétiques, limitent les déplacement radiaux du rotor dans le stator en assurant un centrage approximatif du rotor et en limitant les mouvements radiaux du rotor à une valeur inférieure à l'entrefer des paliers magnétiques. Egalement, pour limiter les vibrations du rotor lors de l'atterrissage, on a proposé d'incorporer dans le palier mécanique d'atterrissage un roulement ayant des moyens élastiques et des moyens d'amortissement tels que décrits dans le document FR 2 614 375 A. La solution décrite dans ce document consiste à insérer, dans un espace annulaire, prévu entre le stator et la bague de roulement qui lui fait face, une lame métallique ondulée.

On a pu constater que cette disposition améliore la longévité des paliers.

Cependant, le nombre d'atterrissages possibles sans dégradation sensible des paliers mécaniques reste limité, ce qui réduit la fiabilité de la pompe à vide et augmente la fréquence des opérations de maintenance. Et l'efficacité du dispositif ne paraît pas suffisante pour éviter les arrêts intempestifs de la pompe.

Il existe un besoin pour augmenter le nombre d'atterrissages possibles et la durée de fonctionnement des paliers mécaniques d'atterrissage à roulement.

En outre, avec les dispositifs connus, on a pu constater un risque de grippage des roulements. En cas de grippage des roulements lorsque le rotor tourne encore à grande vitesse, la destruction de la pompe à vide est quasi certaine.

En outre, le montage et le démontage d'un palier à lame ondulée sont relativement délicats et malaisés, car ils nécessitent l'usage d'outils spécifiques non standards et un temps d'intervention relativement long, et un personnel qualifié et expérimenté. Cela augmente les coûts de production et de maintenance et oblige à assembler entièrement le palier avec sa lame ondulée avant introduction du rotor dans le stator.

Ainsi, le problème proposé par la présente invention est de concevoir une nouvelle structure de palier mécanique d'atterrissage à roulement, qui évite les arrêts intempestifs de la pompe par suite de pertes de contrôle de position du rotor par les paliers magnétiques, et qui présente une longévité accrue pour permettre un plus grand nombre d'atterrissages ou une plus grande durée de fonctionnement sans défaut, en réduisant les risques de grippage.

Un autre objet de l'invention est de faciliter le montage et le démontage des paliers, pour réduire les coûts de production et de maintenance.

La présente invention résulte de l'observation selon laquelle certains défauts de fiabilité des paliers mécaniques d'atterrissage à roulement seraient dus à la présence même des lames ondulées, dans les dispositifs connus. En effet, en fonctionnement normal des paliers magnétiques, les roulements des paliers mécaniques d'atterrissage sont à l'arrêt, solidaires du stator ; lors de l'interruption de fonctionnement des paliers magnétiques, le rotor vient au contact des bagues intérieures des paliers mécaniques d'atterrissage, et entraîne en rotation les bagues intérieures des roulements et les moyens de roulement situés entre les deux bagues ; par l'effet de la rotation rapide du rotor, un couple de rotation est appliqué sur la bague extérieure des roulements et sur la lame ondulée dont le frottement sur le stator ne suffit pas à freiner suffisamment la rotation de la bague extérieure de roulement. La rotation rapide et importante de la bague extérieure de roulement et de la lame ondulée produit une usure des parois du logement qui les contient, ce qui augmente les jeux et réduit progressivement l'efficacité du dispositif ; en outre, les frottements entre les différentes pièces provoquent l'apparition possible de copeaux ou de limaille qui risquent de bloquer les moyens de roulement du palier mécanique.

Ainsi, l'invention vise à supprimer l'utilisation des lames ondulées, et à supprimer simultanément les risques pouvant résulter de l'entraînement en rotation des bagues extérieures de roulement des paliers mécaniques d'atterrissage.

L'invention résulte également de l'observation selon laquelle les arrêts intempestifs de pompes seraient dus à un amortissement insuffisant des lames ondulées, qui ne permettrait pas de supprimer les mouvements de rebond radial du rotor dans le stator.

Ainsi, l'invention vise à augmenter les capacités d'amortissement du palier mécanique d'atterrissage.

L'invention a donc pour but de proposer une nouvelle structure de palier mécanique d'atterrissage à roulement capable de maintenir mécaniquement le rotor pendant une étape d'atterrissage, de résister à la rotation très rapide du rotor et d'améliorer la longévité des paliers pour permettre un plus grand nombre d'atterrissages.

Pour atteindre ces objets ainsi que d'autres, l'invention prévoit une pompe à vide à rotor mobile en rotation dans un stator, ayant au moins un palier magnétique radial qui, en fonctionnement normal, maintient en position radiale centrée le rotor dans le stator selon une précision de maintien normal centré, et ayant au moins un palier mécanique d'atterrissage à roulement qui, à défaut de fonctionnement normal des paliers magnétiques radiaux, limite les déplacements radiaux du rotor dans le stator en assurant un centrage approximatif du rotor, le palier mécanique d'atterrissage à roulement ayant une bague de roulement de rotor et une bague de roulement de stator entre lesquelles sont disposés des éléments de roulement, un premier jeu radial étant prévu entre la première des bagues de roulement de rotor ou de stator et une première portée de rotor ou de stator qui lui correspond, un second débattement radial étant prévu entre la seconde des bagues de roulement de rotor ou de stator et une seconde portée de rotor ou de stator qui lui correspond, des moyens élastiques et des moyens amortisseurs avec des moyens de butée mécanique étant interposés en appui radial entre la seconde des bagues de roulement de rotor ou de stator et la seconde portée de rotor ou de stator qui lui correspond pour limiter le second débattement radial ; selon l'invention lesdits moyens élastiques et les moyens amortisseurs comprennent au moins un anneau coaxial en matériau élastique et amortissant interposé en appui radial entre la seconde des bagues de roulement de rotor ou de stator et la seconde portée de rotor ou de stator qui lui correspond.

Ledit au moins un anneau coaxial en matériau élastique et amortissant vient simultanément en contact de la seconde des bagues de roulement de rotor ou de stator et en contact du rotor ou du stator qui lui correspond.

De préférence, ledit au moins un anneau coaxial en matériau élastique et amortissant est pré-comprimé radialement entre la seconde des bagues de roulement de rotor ou de stator et la seconde portée de rotor ou de stator qui lui correspond.

La pré-compression radiale de l'anneau coaxial en matériau élastique et amortissant peut avantageusement être assurée par des moyens rapportés de compression axiale, qui déterminent ainsi la pré-compression radiale et permettent de la régler et de l'adapter aux conditions d'utilisation.

Selon un mode de réalisation avantageux, lesdits moyens rapportés de compression axiale comprennent au moins une cale rapportée fixée sur le rotor ou le stator correspondant à ladite seconde bague de roulement de stator et venant en appui axial sur le chant frontal de l'anneau coaxial en matériau élastique et amortissant.

Ladite cale rapportée peut avantageusement assurer simultanément la fonction de butée mécanique pour la limitation du second débattement radial.

L'invention peut s'appliquer à un palier mécanique d'atterrissage dans lequel lesdits moyens élastiques comprennent un seul anneau coaxial en matériau élastique et amortissant. Toutefois, lesdits moyens élastiques peuvent avantageusement comprendre, pour la tenue d'un roulement de palier mécanique d'atterrissage, deux anneaux coaxiaux en matériau élastique et amortissant identiques déportés axialement l'un par rapport à l'autre, par exemple soit au contact l'un de l'autre, soit séparés par une douille coaxiale.

Selon l'invention, le rotor de la pompe à vide peut être tenu radialement par un palier magnétique associé à un palier d'atterrissage à roulements selon l'invention. Toutefois, le rotor peut avantageusement être tenu radialement par au moins deux paliers magnétiques radiaux et par au moins deux paliers mécaniques d'atterrissage à roulement munis chacun de moyens élastiques à anneau coaxial en matériau élastique et amortissant tels que définis ci-dessus.

Selon un mode de réalisation avantageux, le premier jeu radial est prévu entre le rotor et la bague de roulement de rotor, et le second débattement radial est prévu entre le stator et la bague de roulement de stator avec interposition radiale du ou des anneaux coaxiaux en matériau élastique et amortissant.

D'autres objets, caractéristiques et avantages de la présente invention ressortiront de la description suivante de modes de réalisation particuliers, faite en relation avec les figures jointes, parmi lesquelles:
- la figure 1 est une vue générale en coupe longitudinale d'une pompe à vide dont le rotor est tenu par des paliers magnétiques et par des paliers mécaniques d'atterrissage associés ;
- la figure 2 est une vue de détail en coupe agrandie de la zone A de la figure 1, illustrant un demi-palier mécanique d'atterrissage à roulement selon un premier mode de réalisation de la présente invention ; et
- la figure 3 est une vue de détail en coupe agrandie de la zone A, illustrant un demi-palier mécanique d'atterrissage à roulement selon un second mode de réalisation de la présente invention.

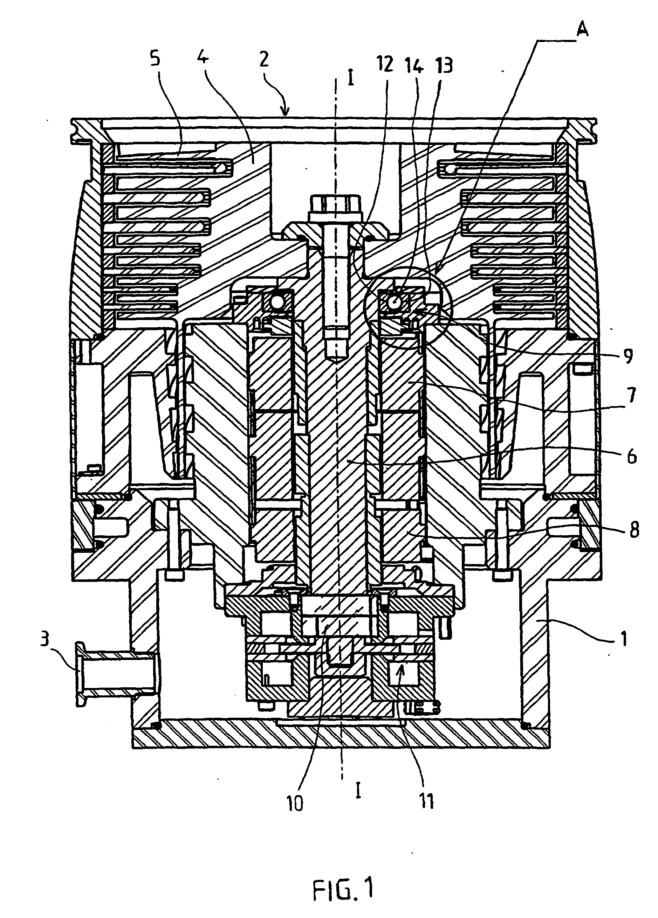

Dans le mode de réalisation de la figure 1, une pompe à vide comprend de façon générale un stator 1 ayant une entrée d'aspiration 2 axiale et une sortie de refoulement 3 radiale. Un rotor 4 est monté à rotation axiale dans le stator 1 selon l'axe longitudinal I-I. Le rotor 4 comprend un système d'aspiration illustré par les ailettes 5, et un arbre 6 tourillonnant dans des paliers du stator 1. On distingue, sur la figure, deux paliers magnétiques radiaux 7 et 8, et deux paliers mécaniques d'atterrissage 9 et 10 à roulement à action radiale. Pour mémoire, on distingue également un palier magnétique axial 11.

En fonctionnement normal, c'est-à-dire en l'absence d'une sollicitation excessive sur l'arbre 6 de la pompe et en cas de fonctionnement normal des paliers magnétiques, ceux-ci maintiennent correctement en position axiale centrée le rotor 4, et les paliers mécaniques d'atterrissage 9 et 10 ne touchent pas l'arbre 6.

Dans le palier mécanique d'atterrissage 9, on distingue une bague de roulement de rotor 12, disposée à proximité et autour de l'arbre 6 du rotor 4, et une bague de roulement de stator 13 disposée à proximité du stator 1. Des éléments de roulement tels que des billes 14, des aiguilles ou tout autre type d'éléments de roulement connus, sont disposés entre la bague de roulement de rotor 12 et la bague de roulement de stator 13, pour constituer un roulement autorisant la rotation axiale relative des deux bagues de roulement 12 et 13.

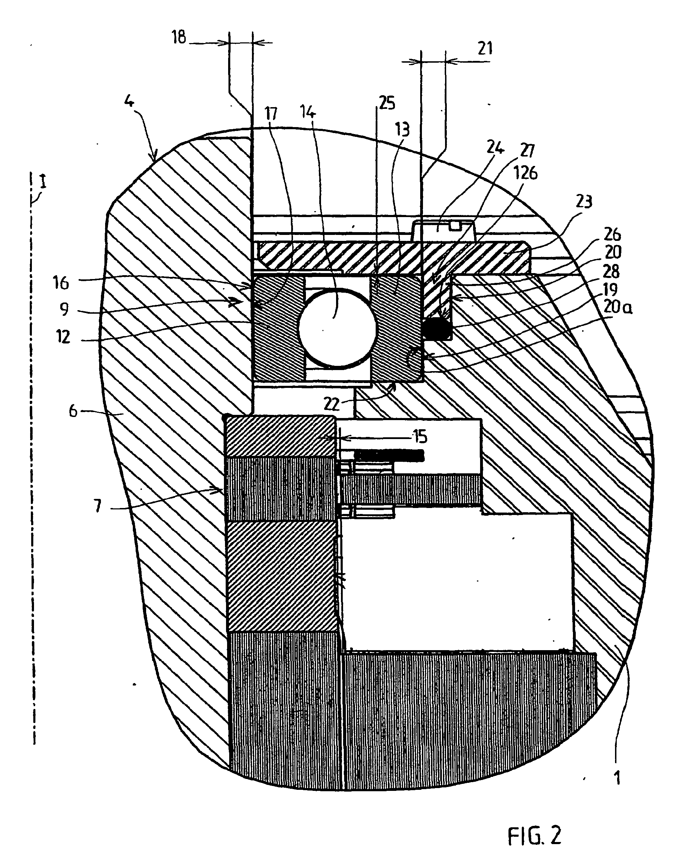

On se référera maintenant à la figure 2, illustrant plus en détail et à plus grande échelle le demi-palier mécanique d'atterrissage 9 en situation entre l'arbre 6 du rotor 4 et une portion correspondante du stator 1. On retrouve l'élément de roulement 14 entre la bague de roulement de rotor 12 et la bague de roulement de stator 13. On retrouve également le palier magnétique radial 7 qui, en fonctionnement normal, assure le centrage de l'arbre 6 du rotor 4 dans le stator 1 en laissant libre un entrefer 15 annulaire définissant le déplacement radial maximal de l'arbre 6 dans le stator 1. Dans les conditions habituelles, l'entrefer 15 peut être d'environ 0,2 à 0,4 mm par exemple. Le palier mécanique d'atterrissage 9 a pour but de réduire les possibilités de déplacement axial de l'arbre 6 du rotor 4 dans le stator 1 à une valeur nettement inférieure à cet entrefer 15, pour éviter la dégradation des paliers magnétiques en cas d'atterrissage.

Entre la face annulaire intérieure 16 de la bague de roulement de rotor 12 et une première portée correspondante 17 de rotor 4, on prévoit un premier jeu radial 18 nettement inférieur à l'entrefer 15 mais seulement légèrement supérieur à la précision de maintien normal centré du rotor 4 par le ou les paliers magnétiques 7. Cette précision de maintien normal centré du rotor 4 est généralement très bonne, inférieure à quelques microns. De même, entre la face annulaire périphérique extérieure 19 de la bague de roulement de stator 13 et une seconde portée correspondante 20 du stator 1, on prévoit un second débattement radial 21 ou distance radiale selon laquelle peut se déplacer la bague de roulement de stator 13 dans le stator 1.

La bague de roulement de stator 13 est engagée dans un logement frontal du stator 1, entre un épaulement axial 22 et une couronne rapportée de fixation 23 tenue sur le stator 1 par des vis dont on distingue la tête 24. De préférence, on laisse un léger jeu axial 25 entre la couronne rapportée de fixation 23 et la face frontale extérieure de la bague de roulement de stator 13.

La couronne rapportée de fixation 23 comporte une nervure annulaire cylindrique coaxiale 26 qui s'engage axialement dans un logement 27 annulaire entre le stator 1 et la bague de roulement de stator 13. Un anneau coaxial en matériau élastique et amortissant 28, par exemple en élastomère, est placé dans le logement 27, ainsi interposé radialement entre la bague de roulement de stator 13 et la seconde portée 20 de stator qui lui correspond, et en appui radial à la fois contre ladite bague de roulement de stator 13 et ladite seconde portée 20 de stator.

Dans la réalisation illustrée, l'anneau coaxial en matériau élastique et amortissant 28 tel qu'un élastomère est de forme torique et est comprimé axialement entre la nervure annulaire cylindrique coaxiale 26 de la couronne rapportée de fixation 23 et le fond du logement 27, provoquant l'expansion radiale de l'anneau coaxial en élastomère 28 qui vient porter simultanément contre la face annulaire périphérique extérieure 19 de la bague de roulement de stator 13 et contre la seconde portée 20 du stator 1.

Dans le dispositif illustré sur la figure 2, le logement 27 est conformé de façon que l'anneau coaxial en élastomère 28 soit placé sensiblement à mi-course de la longueur axiale du palier mécanique d'atterrissage 9. Egalement, les première et seconde portées 17 et 20 sont cylindriques coaxiales. En alternative, on pourra concevoir des structures similaires selon l'invention avec des portées 17 et 20 coniques.

La nervure annulaire cylindrique coaxiale 26 constitue une cale rapportée, fixée sur le stator 1, qui vient en appui axial sur le chant frontal de l'anneau coaxial en élastomère 28 par une surface annulaire d'extrémité 126. Cette surface annulaire d'extrémité 126 peut être une couronne transversale plate, comme illustré sur les figures. En alternative, pour moduler la compression radiale qui en résulte sur l'anneau coaxial en élastomère 28, la surface annulaire d'extrémité peut être conique inclinée à droite ou à gauche, anguleuse convexe ou concave, incurvée convexe ou concave.

Dans ces modes de réalisation, ladite cale rapportée constituée par la nervure annulaire cylindrique coaxiale 26 assure simultanément la fonction de butée mécanique de limitation du second débattement radial 21, en prévoyant que son épaisseur radiale est supérieure ou égale à l'épaisseur radiale du logement 27. De la sorte, au-delà de la capacité de déformation élastique de l'anneau coaxial en élastomère 28, la bague de roulement de stator 13 vient en appui radial contre la nervure cylindrique frontale 26.

Lors d'un atterrissage, le fonctionnement est le suivant : initialement, la bague de roulement de rotor 12 ne touche pas l'arbre 6 qui tourne à grande vitesse autour de son axe I-I. A l'interruption de fonctionnement des paliers magnétiques radiaux tels que le palier 7, le rotor 4 peut se déplacer radialement selon le premier jeu radial 18 jusqu'à venir en contact de la bague de roulement de rotor 12 qui est alors entraînée en rotation et qui entraîne également en rotation l'élément de roulement 14. La bague de roulement de stator 13, contrairement au dispositif connu à lame ondulée, se trouve freinée en rotation par le frottement de l'anneau coaxial en élastomère 28 pré-comprimé. On évite ainsi tout risque d'usure par frottement de la bague de roulement de stator 13 contre le stator 1 et contre la couronne rapportée de fixation 23. Ainsi, l'anneau coaxial en élastomère 28 assure une première fonction de frein de la bague de roulement de stator 13, évitant les dégradations par usure et les risques de grippage du roulement. Simultanément, l'anneau coaxial en élastomère 28, par sa capacité de compression élastique radiale, autorise un déplacement radial de la bague de roulement de stator 13, et donc de l'arbre 6 de rotor 4, selon le second débattement radial 21 jusqu'à venir en butée contre la nervure annulaire cylindrique coaxiale 26 et/ou contre une portée cylindrique coaxiale 20a du stator 1, tout en assurant une liaison élastique amortie. Par les qualités de la matière constituant l'anneau coaxial en matériau élastique et amortissant 28, que l'homme du métier peut choisir sans difficulté, l'amortissement peut être très supérieur à celui obtenu dans le dispositif connu à lame ondulée. De bons résultats ont été obtenus en utilisant des anneaux coaxiaux en élastomère 28 de dureté comprise dans la plage de 50 à 90 Shore, bien que d'autres valeurs puissent convenir en fonction des applications.

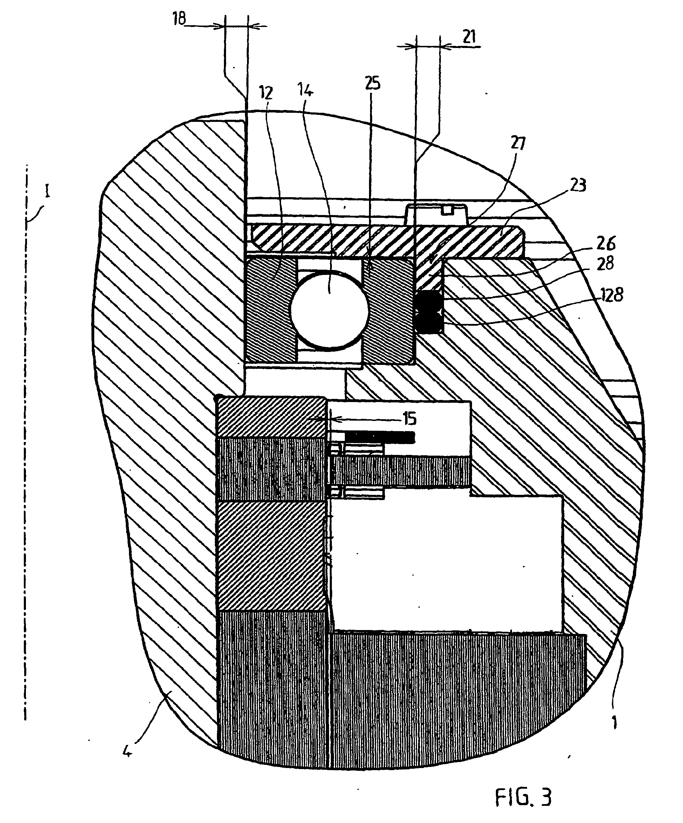

Dans le second mode de réalisation illustré sur la figure 3, on retrouve sensiblement les mêmes éléments que dans le mode de réalisation de la figure 2, avec les mêmes formes et les mêmes fonctions, et ceux-ci sont repérés par les mêmes références numériques.

La seule différence réside dans le fait que, dans le logement 27, on prévoit deux anneaux coaxiaux en matériau élastique et amortissant 28 et 128 identiques déportés axialement l'un par rapport à l'autre, par exemple en élastomère.

## Revendications

1. Pompe à vide à rotor (4) mobile en rotation dans un stator (1), ayant au moins un palier magnétique radial (7, 8) qui, en fonctionnement normal, maintient en position radiale centrée le rotor (4) dans le stator (1) selon une précision de maintien normal centré, et ayant au moins un palier mécanique d'atterrissage (9, 10) à roulement qui, à défaut de fonctionnement normal des paliers magnétiques radiaux (7, 8), limite les déplacements radiaux du rotor (4) dans le stator (1) en assurant un centrage approximatif du rotor (4), le palier mécanique d'atterrissage (9) à roulement ayant une bague de roulement de rotor (12) et une bague de roulement de stator (13) entre lesquelles sont disposés des éléments de roulement (14), un premier jeu radial (18) étant prévu entre la première (12) des bagues de roulement de rotor ou de stator et une première portée (17) de rotor ou de stator qui lui correspond, un second débattement radial (21) étant prévu entre la seconde (13) des bagues de roulement de rotor ou de stator et une seconde portée (20) de rotor ou de stator qui lui correspond, des moyens élastiques et des moyens amortisseurs avec des moyens de butée mécanique étant interposés en appui radial entre la seconde (13) des bagues de roulement de rotor ou de stator et la seconde portée (20) de rotor ou de stator qui lui correspond pour limiter le second débattement radial (21), **caractérisée en ce que** lesdits moyens élastiques et les moyens amortisseurs comprennent au moins un anneau coaxial en matériau élastique et amortissant (28) interposé en appui radial entre la seconde (13) des bagues de roulement de rotor ou de stator et la seconde portée (20) de rotor ou de stator qui lui correspond.

2. Pompe à vide selon la revendication 1, **caractérisée en ce que** ledit au moins un anneau coaxial en matériau élastique et amortissant (28) est pré-comprimé radialement entre la seconde (13) des bagues de roulement de rotor ou de stator et la seconde portée (20) de rotor ou de stator qui lui correspond.

3. Pompe à vide selon la revendication 2, **caractérisée en ce que** ledit au moins un anneau coaxial en matériau élastique et amortissant (28) est sollicité par des moyens rapportés (23, 26) de compression axiale qui déterminent sa pré-compression radiale.

4. Pompe à vide selon la revendication 3, **caractérisée en ce que** lesdits moyens rapportés de compression axiale comprennent au moins une cale rapportée (26) fixée sur le rotor ou le stator (1) correspondant à ladite seconde bague de roulement de stator (13) et venant en appui axial sur le chant frontal de l'anneau coaxial en matériau élastique et amortissant (28).

5. Pompe à vide selon la revendication 4, **caractérisée en ce que** ladite cale rapportée (26) assure simultanément la fonction de butée mécanique de limitation du second débattement radial (21).

6. Pompe à vide selon l'une quelconque des revendications 1 à 5, **caractérisée en ce que** lesdits moyens élastiques comprennent, pour la tenue d'un roulement de palier mécanique d'atterrissage (9), deux anneaux coaxiaux en matériau élastique et amortissant (28, 128) identiques déportés axialement l'un par rapport à l'autre.

7. Pompe à vide selon l'une quelconque des revendications 1 à 6, **caractérisée en ce que** le rotor (4) est tenu radialement par au moins deux paliers magnétiques radiaux (7, 8) et par au moins deux paliers mécaniques d'atterrissage (9, 10) à roulement munis chacun de moyens élastiques à anneau coaxial en matériau élastique et amortissant (28).

8. Pompe à vide selon l'une quelconque des revendications 1 à 7, **caractérisée en ce que** le premier jeu radial (18) est prévu entre le rotor (4) et la bague de roulement de rotor (12), et le second débattement radial (21) est prévu entre le stator (1) et la bague de roulement de stator (13) avec interposition radiale du ou des anneaux coaxiaux en matériau élastique et amortissant (28).

9. Pompe à vide selon l'une quelconque des revendications 1 à 8, **caractérisée en ce que** ledit au moins un anneau coaxial en matériau élastique et amortissant (28) est de forme torique.

10. Pompe à vide selon l'une quelconque des revendications 1 à 9, **caractérisée en ce que** ledit au moins un anneau coaxial en matériau élastique et amortissant (28) est en élastomère.

## Claims

1. A vacuum pump with a rotor (4) moving in rotation within a stator (1), having at least one radial magnetic bearing (7, 8), which, in normal operation, keeps the rotor (4) in a centered radial position within the stator (1) to within a normal centered holding accuracy, and having at least one landing mechanical rolling bearing (9, 10) which, when the radial magnetic bearings (7, 8) are not operating normally, limits the radial movements of the rotor (4) within the stator (1) by keeping the rotor (4) approximates centered, said landing mechanical rolling bearing (9) having a rotor rolling bearing race (12) and a stator rolling bearing race (13) between which are disposed rolling bearing members (14), a first radial clearance (18) being provided between the first (12) of the rotor or stator rolling bearing races and a first rotor or stator surface (17) corresponding thereto, a second radial clearance (21) being provided between the second (13) of the rotor or stator rolling bearing races and a second rotor or stator surface (20) corresponding thereto, elastic means and damper means with mechanical abutment means being interspersed in radial bearing engagement with the second (13) of the rotor or stator rolling bearing races and the second rotor or stator surface (20) corresponding thereto in order to limit the second radial clearance (21), **characterized in that** said elastic means and damper means comprise at least one coaxial ring made of elastic and damping material (28) interspersed in radial bearing engagement with the second (13) of the rotor or stator rolling bearing races and the second rotor or stator surface (20) corresponding thereto,

2. A vacuum pump according to claim 1, **characterized in that** said at least one coaxial ring made of elastic and damping material (28) is pre-compressed radially between the second (13) of the rotor or stator, rolling bearing races and the second rotor or stator surface (20) corresponding thereto.

3. A vacuum pump according to claim 2, **characterized in that** said at least one coaxial ring made of elastic and damping material (28) is loaded by attached means (23, 26) of axial compression which determine its radial pre-compression.

4. A vacuum pump according to claim 3, **characterized in that** said attached means of axial compression comprise at least one attached wedge (26) fastened to the rotor or stator (1) corresponding to said second stator rolling bearing race (13) and bearing axially upon the front edge of the coaxial ring of elastic and damping material (28).

5. A vacuum pump according to claim 4, **characterized in that** said attached wedge (26) simultaneously assures the function of a mechanical abutment limiting the second radial clearance (21).

6. A vacuum pump according to claims 1 to 5, **characterized in that** said elastic means comprise two identical coaxial rings made of elastic and damping material (28, 128) offset axially relative to each other, for holding a landing mechanical rolling bearing (9).

7. A vacuum pump according to claims 1 to 6, **characterized in that** the rotor (4) is held radially by at least two radial magnetic bearings (7, 8) and by at least two mechanical landing rolling bearing (9, 10) that are each equipped with elastic means having coaxial rings made of elastic and damping material (28).

8. A vacuum pump according to claims 1 to 7, **characterized in that** the first radial clearance (18) is provides between the rotor (4) and the rotor bearing race (12), and the second radial clearance (21) is provided between the stator (1) and the stator rolling, bearing race (13), with the coaxial rings made of elastic and damping material (28) being interspersed radially between them.

9. A vacuum pump according to claims 1 to 8, **characterized in that** said at least one coaxial ring made of elastic and damping material (28) is in the shape of a torus.

10. A vacuum pump according to claims 1 to 9, **characterized in that** said at least one coaxial ring made of elastic and damping material (28) is made of an elastomer.

## Patentansprüche

1. Vakuumpumpe mit in Drehung beweglichem Rotor (4) in einem Stator (1), mit mindestens einem radialen Magnetlager (7, 8), weiches den Rotor (4) bei normalem Betrieb in zentrietier Radialposition entsprechend einer normal-zentrierten Haltepräzision im Stator (1) hält, und mit mindestens einem mechanischen Lande-Wälzlager (9, 10), welches mangels normalen Betriebs des radialen Magnetlagers (7, 8) die radialen Bewegungen des Rotors (4) im Stator (1) begrenzt und dabei eine ungefähre Zentrierung des Rotors (4) gewährleistet, wobei das mechanische Lande-Wälzlager (9) einen Rotor-Lagerring (12) und einen Stator-Lagerring (13) aufweist, zwischen welchen Elemente des Lauflagers (14) angeordnet sind, wobei ein erstes radiales Spiel (18) zwischen dem ersten (12) der Rotor- oder Stator-Laufringe und einer ersten Reichweite (17) des Rotors oder des Stators, welche ihm entspricht, vorgesehen ist, wobei ein zweiter radialer Ausschlag (21) mischen der zweiten (13) der Rotor- oder Stator-Laufringe und einer zweiten Reichweite (20) des Rotors oder des Stators, welcher ihr entspricht, vorgesehen ist, wobei elastische Mittel und Dämpfungsmittel mit mechanischen Anschlagmitteln zwischen dem zweiten (13) der Rotor- oder Stator-Laufringe und der zweiten Reichweite (20) des Rotors oder des Stators, welcher ihr entspricht, als radiale Stütze interpositioniert sind, um den zweiten radialen Ausschlag (21) zu begrenzen, **dadurch gekennzeichnet, dass** die besagten elastischen Mittel und die Dämpfungsmittel mindestens einen koaxialen Ring aus elastischem und dämpfendem Material (28), welcher als radiale Stütze zwischen der zweiten (13) der Rotor- oder Stator-Laufringe und der zweiten Reichweite (20) des Rotors oder des Stators, welcher ihr entspricht, interpositioniert ist, umfassen,

2. Vakuumpumpe nach Anspruch 1, **dadurch gekennzeichnet, dass** der besagte mindestens eine koaxiale Ring aus elastischem und dämpfendem Material (28) zwischen dem zweiten (13) der Rotor- oder Stator-Lagerringe und der zweiten Reichweite (20) des Rotors oder des Stators, welcher ihm entspricht, radial vorverdichtet ist.

3. Vakuumpumpe nach Anspruch 2, **dadurch gekennzeichnet, dass** der besagte mindestens eine koaxiale Ring aus elastischem und dämpfenden Material (28) von aufgesetzten Axialverdichtungsmitteln (23, 26), welche seine radiale Vorverdichtung definieren, beansprucht wird.

4. Vakuumpumpe nach Anspruch 3, **dadurch gekennzeichnet, dass** die besagten aufgesetzten Axialverdichtungsmittel mindestens einen auf dem Rotor oder auf dem Stator (1) befestigten Unterlegkeil (26) umfassen, welcher dem besagten zweiten Stator-Lagerring (13) entspricht und sich axial auf die Vorderkante des koaxialen Rings aus elastischem und dämpfenden material (28) stützt, umfasst.

5. Vakuumpumpe nach Anspruch 4, **dadurch gekennzeichnet, dass** der besagte Unterlegkeil (26) gleichzeitig die Funktion eines mechanischen Begrenzungsanschlags des zweiten radialen Ausschlags (21) ausübt.

6. Vakuumpumpe nach einem beliebigen der Ansprüche 1 bis 5, **dadurch gekennzeichnet, dass** die besagten elastischen Mittel für den Halt eines Lauflagers des mechanischen Lande-Wälzlagers (9) zwei identische koaxiale Ringe aus elastischem und dämpfenden Material (28, 128) umfassen, welche im Verhältnis zueinander axial verschoben sind.

7. Vakuumpumpe nach einem beliebigen der Ansprüche 1 bis 6, **dadurch gekennzeichnet, dass** der Rotor (4) radial von mindestens zwei radialen Magnetlagern (7, 8) und von mindestens zwei mechanischen Lande-Wälzlagern (9, 10), welche jeweils mit elastischen Mitteln mit koaxialem Ring aus elastischem und dämpfenden Material versehen sind, gehalten werden.

8. Vakuumpume nach einem beliebigen der Ansprüche 1 bis 7, **dadurch gekennzeichnet, dass** das erste radiale Spiel (18) zwischen dem Rotor (4) und dem Rotor-Lagerring (12) vorgesehen ist, und dadurch, dass der zweite radiale Ausschlag (21) zwischen dem Stator (1) und dem Stator-Lagerring (13) mit radialer Interpositionierung des oder der koaxialen Ringe aus elastischem und dämpfenden Material (28) vorgesehen ist.

9. Vakuumpumpe nach einem beliebigen der Ansprüche 1 bis 8, **dadurch gekennzeichnet, dass** der besagte mindestens eines koaxiale Ring aus elastischem und dämpfenden Material (28) die Form eines O-Rings aufweist.

10. Vakuumpumpe nach einem beliebigen der Ansprüche 1 bis 9, **dadurch gekennzeichnet, dass** der besagte mindestens eine koaxiale Ring aus elastischem und dämpfendem Material (28) aus Elastomer besteht.
